(19) **Europäisches Patentamt European Patent Office Office européen des brevets**

(11) **EP 1 692 940 B1**

(12) **EUROPEAN PATENT SPECIFICATION**

(45) Date of publication and mention
of the grant of the patent:
**29.02.2012 Bulletin 2012/09**

(51) Int Cl.:
*A01N 65/00* (2009.01)      *A23L 1/068* (2006.01)
*A23L 2/02* (2006.01)      *A23L 3/3472* (2006.01)

(21) Application number: **04820298.0**

(22) Date of filing: **10.12.2004**

(86) International application number:
**PCT/JP2004/018482**

(87) International publication number:
**WO 2005/055725 (23.06.2005 Gazette 2005/25)**

(54) **BACTERIAL GROWTH INHIBITOR OR BACTERIOSTATIC AGENT UTILIZING SUBSTANCE DERIVED FROM ACEROLA FRUIT**

BAKTERIENWACHSTUMSHEMMER ODER BEKTERIOSTATISCHES MITTEL, BEI DEM EINE SUBSTANZ AUS DER ACEROLA-FRUCKT VERWENDET WIRD

INHIBITEUR DE LA PROLIFERATION BACTERIENNE OU AGENT BACTERIOSTATIQUE UTILISANT UNE SUBSTANCE DERIVEE DU FRUIT DE L'ACEROLA

(84) Designated Contracting States:
**DE ES FR GB IT NL**

(30) Priority: **12.12.2003 JP 2003415127**

(43) Date of publication of application:
**23.08.2006 Bulletin 2006/34**

(73) Proprietor: **Nichirei Foods Inc.
Tokyo 104-8402 (JP)**

(72) Inventors:
• **TANADA, Shozo,**
**c/o NICHIREI FOODS INC.,**
**Mihama-ku, Chiba-shi, Chiba (JP)**
• **TAJIMA, Rie,**
**c/o NICHIREI FOODS INC.,**
**Mihama-ku, Chiba-shi, Chiba (JP)**
• **KOIZUMI, Takeshi,**
**c/o NICHIREI FOODS INC.,**
**Mihama-ku, Chiba-shi, Chiba (JP)**
• **YAMAMOTO, Satoshi,**
**c/o NICHIREI FOODS INC.,**
**Mihama-ku, Chiba-shi, Chiba (JP)**

• **AOKI, Hitoshi,**
**c/o NICHIREI FOODS INC.,**
**Mihama-ku, Chiba-shi, Chiba (JP)**
• **HANAMURA, Takayuki,**
**c/o NICHIREI FOODS INC.,**
**Mihama-ku, Chiba-shi, Chiba (JP)**
• **MAYAMA, Chisato,**
**c/o NICHIREI FOODS INC.,**
**Mihama-ku, Chiba-shi, Chiba (JP)**

(74) Representative: **Hart-Davis, Jason et al
Cabinet Beau de Loménie
158, rue de l'Université
75340 Paris Cedex 07 (FR)**

(56) References cited:
WO-A-01/64041      DE-A1- 10 026 182
JP-A- 5 344 846      JP-A- 62 208 236
JP-A- 2000 004 768      JP-A- 2001 128 651

• **SHADAN HOJIN NIPPON KAJU KYOKAI:
'Saishain Kaju Katitsu inryo Jiten', 01 October
1997 pages 182 - 183, XP002990221**

## Description

TECHNICAL FIELD

The present invention relates to a bacterial growth inhibitor or bacteriostatic function of naturally occurring substances.

BACKGROUND ART

Conventionally, bacteria belonging to the genus *Alicyclobacillus* are known as simultaneously thermo-resistant and acid-resistant bacteria (TAB: thermo acidophilic bacilli). Moreover, spores of bacteria belonging to the genus *Alicyclobacillus* are known to be resistant to general pasteurization for fruit juice and the like.
In particular, bacteria belonging to the genus *Alicyclobacillus,* such as *Alicyclobacillus acidoterrestris, Alicyclobacillus acidiphilus,* and *Alicyclobacillus herbarius,* are supposed to be non-noxious to humans by themselves. However, they produce an odorous (chemical smelly) substance called guaiacol, by metabolizing vanillin and the like contained in food and food additives. Moreover, an odor of a degree that can be sensed by humans is emitted by a very small amount of bacteria. Therefore, recently, *Alicyclobacillus acidoterrestris* has been a problem as a cause of lowering food quality, mainly among beverage manufacturers. In order to inhibit/block the growth of these bacteria in fruit juice and fruit drinks, artificial preservatives such as benzoic acid are effective.
However, as a substance for inhibiting/blocking bacterial growth, there is customer demand for a substance derived from naturally occurring substances with effectiveness at a low concentration.
There are already several examples of substances that meet such a demand. For example, in the case of preservation of fruit juice, fruit drinks, or the like, as a substance derived from naturally occurring substances for inhibiting/blocking the growth of *Alicyclobacillus acidoterrestris,* there is nisin, which is a peptide derived from lactic bacteria (Non-Patent Document 1), α-type thionin and β-type thionin derived from grains (Patent Document 1), 1,5-D-anhydrofructose derived from starch or starch decomposition products (Patent Document 2), active concentrate derived from cranberry (Patent Document 3), and polyphenol derived from grape (Non-Patent Document 2).

[Patent Document 1] Japanese Unexamined Patent Application, First Publication No. 2002-37705
[Patent Document 2] Japanese Unexamined Patent Application, First Publication No. 2002-17319
[Patent Document 3] Published Japanese Translation No. 2001-516565 of the PCT application
[Non-Patent Document 1] International Journal of Food Science and Technology 1999,34,81-85
[Non-Patent Document 2] Nippon Shokuhin Kogaku Kaishi Vol. 49, No. 8, 555-558 (2002)

Food products having a product from Acerola as an ingredient are shown in Shadan Hojin Nippon Kaju Kyokai: 'Saishain Kaju Katitsu inryo Jiten', 01 October 1997, pp. 182-183, JP-A-5 334 846, JP 2001 128651 A, JP 62 208 236 A, JP 2000 004768 A, WO 01/64041 A, JP 5207865, DE 4111040 C and JP 602272.
DE 100 26 182 A1 discloses a cholostrum milk product and bactericidal function of cholostrum. The cholostrum milk product may be added with acerola cherry.

DISCLOSURE OF INVENTION

[Problems to be Solved by the Invention]

However, there are respective individual problems for using the above substances as substances derived from naturally occurring substances for inhibiting/blocking the growth of *Alicyclobacillus acidoterrestris.*
That is, nisin contains unique amino acids such as dehydroalanine, and presently is not approved as a food additive in Japan.
Moreover, in the case of substances other than nisin, there is the problem of complicated preparation method. That is, α-type thionin and β-type thionin are components containing about 45 amino acids. They are required to be extracted from farina of grains such as barley, wheat, oats, and rye. 1,5-D-anhydrofructose is required to be prepared from starch or starch decomposition products, by utilizing the action of an enzyme derived from a plant tissue such as a microorganism or red algae. Regarding the substance derived from cranberry, cranberry fruit and the like is required to be treated using a suitable binding matrix. Moreover, the polyphenol derived from grape is required to be hydrothermally extracted from "Kyoho" seeds, and to then be prepared as a Sephadex absorption fraction. These four types of substances (or extractions) are antibacterial substances derived from naturally occurring substances, but as described above, are so difficult to prepare and handle that they have not come into practical use as substances which inhibit or block the growth of *Alicyclobacillus acidoterrestris.*

Therefore, an object of the present invention is to provide a bacterial growth inhibitor or bacteriostatic agent against bacteria belonging to the genus *Alicyclobacillus,* in particular, guaiacol-producible *Alicyclobacillus acidoterrestris, Alycyclobacillus acidiphilus,* and *Alicyclobacillus herbarius,* the bacterial growth inhibitor or bacteriostatic agent being derived from naturally occurring substances and facile in procurement, preparation, and handling.

[Means for Solving the Problem]

The present inventors have studied diligently in order to solve the above problems, resulting in the finding that fruit juice derived from acerola (*Malpighia emarginata* DC.) fruit and the like is capable of inhibiting or blocking the growth of bacteria belonging to the genus *Alicyclobacillus,* and have completed the present invention as defined in claim 1.

A bacterial growth inhibitor or bacteriostatic agent against thermo acidophilic bacilli (TAB), may contain puree or fruit juice obtained from acerola fruit, as an active ingredient.

Such bacterial growth inhibitor or bacteriostatic agent against thermo acidophilic bacilli (TAB) may contain a dried puree or fruit juice obtained from the acerola fruit, as an active ingredient.

In such bacterial growth inhibitor or bacteriostatic agent against thermo acidophilic bacilli (TAB) the puree or fruit juice obtained from the acerola fruit may be desugared.

In an aspect of the present invention, the thermo acidophilic bacilli (TAB) are bacteria belonging to the genus *Alicyclobacillus.*

In a further aspect of the present invention, the bacteria belonging to the genus *Alicyclobacillus* are *Alicyclobacillus acidoterrestris, Alicyclobacillus acidiphilus,* or *Alicyclobacillus herbarius.*

A bacterial growth inhibitor or bacteriostatic agent may be added to food or drink.

A food or drink may contain the bacterial growth inhibitor or bacteriostatic agent.

In an aspect of the present invention, puree or fruit juice obtained from acerola fruit, a desugared substance thereof, or a dried **puree or fruit** juice obtained from acerola fruit is inhibiting or blocking bacterial growth.

A method for manufacturing food or drink, may include a step of adding the bacterial growth inhibitor or bacteriostatic agent.

Inhibiting or blocking bacterial growth in food or drink, may include a step of adding the bacterial growth inhibitor or bacteriostatic agent into the food or drink.

[Effects of the Invention]

The bacterial growth inhibitor or bacteriostatic agent utilizing fruit juice derived from acerola fruit is derived from naturally occurring substances. Used according to the invention as defined in claim 1, it has a superior effect of inhibiting or blocking the growth of thermo acidophilic bacilli (TAB). Furthermore, upon its preparation, substantially neither special devices nor operations are required, so it is also advantageous from the point of view of manufacturability and cost.

BRIEF DESCRIPTION OF THE DRAWINGS

FIG. 1 is a graph showing the bacterial growth inhibiting or blocking capability of acerola fruit juice.

FIG. 2 is a graph showing the bacterial growth inhibiting or blocking capability of acerola fruit juice with respect to Alicyclobacillus acidocaldarius.

FIG. 3 is a graph showing the bacterial growth inhibiting or blocking capability of acerola fruit juice with respect to Alicyclobacillus cycloheptanicus.

FIG. 4 is a graph showing the bacterial growth inhibiting or blocking capability of acerola fruit juice with respect to *Alicyclobacillus herbarius.*

FIG. 5 is a graph showing the bacterial growth inhibiting or blocking capability of acerola fruit juice with respect to Alicyclobacillus hesperidum.

FIG. 6 is a graph showing the bacterial growth inhibiting or blocking capability of acerola fruit juice with respect to Alicyclobacillus acidiphilus.

FIG. 7 is a graph showing the bacterial growth inhibiting or blocking capability of solid contents of acerola fruit juice.

FIG. 8 is a graph showing the bacterial growth inhibiting or blocking capability of solid contents of acerola fruit juice in an apple juice.

FIG. 9 is a graph showing the bacterial growth inhibiting or blocking capability of solid contents of acerola fruit juice in various fruit juices.

FIG. 10 is a graph showing the bacterial growth inhibiting or blocking capability of solid contents of desugared acerola fruit juice.

BEST MODE FOR CARRYING OUT THE INVENTION

The acerola used in the present invention is a plant of Malpighiaceae Malpighia originating from tropical America, which is also called Barbados Cherry and West Indian Cherry. The variety of the acerola used in the present invention is not specifically limited, and for example acerola fruit from Southeast Asia and Brazil may be suitably used. Moreover, the scientific name for acerola is *Malpighia emarginata* DC., but one from Puerto Rico may be referred to as *M. punicifolia L.* and one from Cuba, Florida, or Central America may be referred to as *M. glabla L.* in some cases. However, currently these two scientific names are considered synonymous. Consequently, the acerola used in the present invention is not limited to either one of these scientific names.

The puree or fruit juice obtained from acerola fruit used for the bacterial growth inhibitor or bacteriostatic agent in the present invention can be prepared from acerola fruit as the raw material, using a general preparation method for puree/fruit juice. For example, the puree can be obtained by directly squeezing or straining the edible portion of acerola fruit, with a cloth such as a bleached cotton cloth or a strainer. Moreover, it can be also obtained by crushing the edible portion of acerola fruit with the seeds removed. The fruit juice can be obtained by using the puree as the raw material which is subjected to purification treatment such as centrifugation. Alternatively, the fruit may be mechanically squeezed using a squeezer. The puree and the fruit juice obtained in such a manner may contain insoluble substances, or may be subjected to enzyme treatment using pectinase or the like, or a clarifying process such as ultrafiltration, as required. These preparations may be used after suitably changing their concentration by concentration or dilution.

The dried substance of puree or fruit juice obtained from acerola fruit used for the bacterial growth inhibitor or bacteriostatic agent in the present invention is a solid substance obtained from the puree or fruit juice that has been prepared in the above manner and then suitably freeze-dried, spray-dried, drum-dried, or otherwise dried.

In the present invention, the puree or fruit juice obtained from the acerola fruit may be used after being subjected to a desugaring treatment. Examples of methods of desugaring treatment include a method in which the puree or fruit juice obtained from acerola fruit is concentrated or diluted until the concentration thereof becomes appropriate, the concentrate or dilution is fermented by a microorganism such as yeast, the fermented matter is separated into a supernatant and a solid portion containing the microorganism by carrying out centrifugation or the like after the fermentation, and the supernatant is suitably freeze-dried to be powdered. The condition of fermentation may be suitably determined by a person skilled in the art, considering the properties and the condition of the puree/fruit juice to be fermented, the type of microorganism to be used, and the like. Preferably, fermentation is performed until the glucose and fructose contained in the puree or fruit juice become 0%.

The puree or fruit juice obtained from acerola fruit used for the bacterial growth inhibitor or bacteriostatic agent (hereinafter, called acerola fruit juice) may be used raw (unheated), or may be used after heat sterilization. In practice, both unheated acerola fruit juice and heat sterilized acerola fruit juice are equivalently capable of inhibiting or blocking the growth of thermo acidophilic bacilli (TAB). The acerola fruit juice used for the bacterial growth inhibitor or bacteriostatic agent in the present invention is normally used after being heated. The heat treatment can be performed, for example in hot water at 70 to 120°C for 1 second to 20 minutes.

A food or drink to which the bacterial growth inhibitor or bacteriostatic agent is to be added is not specifically limited. However, examples thereof include beverages such as soft drinks and refreshing drinks, and food such as jelly, yogurt, and ice cream. In the case of a solid food, if it is processed in a liquid or semisolid state in its manufacturing process, the bacterial growth inhibitor or bacteriostatic agent is added to the liquid or semisolid. In the case of a solid food which does not take the form of a liquid or a semisolid state, almost no problem is caused by TAB.

In the case of a form of puree or fruit juice, the bacterial growth inhibitor or bacteriostatic agent is preferably contained in the food or drink so that the final concentration in the food or drink is within a range between 0.5 and 100% by mass. Meanwhile, in the case of a dried solid form, it is preferably contained in the food or drink so that the final concentration in the food or drink is within a range between 0.05 and 10% by mass. In the case where the bacterial growth inhibitor or bacteriostatic agent is applied to a fruit drink/refreshing drink, the content of the acerola fruit juice or puree is 0.5 to 100 parts by weight, and more preferably 2 to 10 parts by weight with respect to 100 parts by weight of the drink. Meanwhile, in the case where it is applied to a food, the content of the acerola fruit juice or puree is 0.1 to 20 parts by weight, and more preferably 1 to 10 parts by weight with respect to 100 parts by weight of the food.

In the bacterial growth inhibitor or bacteriostatic agent , in addition to acerola fruit juice, other substances such as an inactive carrier, an adjuvant, and an antibacterial substance may be added at appropriate concentrations, unless the effect of the acerola fruit juice is eliminated or decreased.

Examples of inactive carriers include: 1) saccharides such as starch, maltodextrin, cyclodextrin, roasted dextrin, sucrose, glucose, maltose, and lactose, 2) polysaccharide thickeners such as carboxymethylcellulose, agar, agar decomposition product, carrageenan, glucomannan, locust bean gum, and xanthan gum, 3) cereal flours such as wheat flour, rice flour, and corn flour, and 4) proteins such as defatted soybean, skim milk, and corn proteins. Moreover, in the case of a liquid state or gel state, in addition to the above substances, examples thereof also include substances which are liquid at normal temperature and pressure, such as water, alcohol, and acetic acid.

Examples of adjuvants include various acids and salts such as adipic acid, propionic acid, sodium propionate, calcium propionate, lactic acid, sodium lactate, calcium lactate, citric acid, trisodium citrate, sorbic acid, potassium sorbate, succinic acid, monosodium succinate, disodium succinate, fumaric acid, monosodium fumarate, gluconic acid, sodium gluconate, calcium gluconate, DL-tartaric acid, L-tartaric acid, DL-sodium tartrate, DL-malic acid, DL-sodium malate, benzoic acid, sodium benzoate, glucono delta lactone, carbonates, carbon dioxide, nitrites, phosphoric acid, phosphates, polyphosphates (sodium pyrophosphate, sodium tripolyphosphate, hexametaphosphate, and the like), itaconic acid, and phytic acid. Moreover, as the adjuvant, various antioxidants may be added. Examples thereof include antioxidants such as ascorbic acid, and sodium, potassium, and calcium salts and fatty acid esters thereof, erythorbic acid, and sodium, potassium, and calcium salts and fatty acid esters thereof, and $\alpha$-tocopherol, $\beta$-tocopherol, $\gamma$-tocopherol, $\delta$-tocopherol, $\beta$-carotene, carotenoid, catechins, tannin, flavonoid, anthocyanin, polyphenol, BHT, 2-BHA, 3-BHA, butylhydroxyanisole, uric acid, DHA, IPA, EPA, EDTA, guaiac resin, isopropyl citrate, dibutylhydroxytoluene, nordihydroguaiaretic acid, and propyl gallate.

Examples of antibacterial substances include acetic acid, sodium acetate, glycerin fatty acid ester, polyglycerin fatty acid ester, sugar ester, thiamine dilaurylsulfate, sodium dehydroacetate, glycine, protamine, polylysine, egg white lysozyme, chitosan, ethanol, horse-radish extract, mustard extract, clove extract, cinnamon extract, sage extract, pimenta extract, pepper extract, rosemary extract, oregano extract, garlic extract, fig leave extract, citrus seed extract, mulberry extract, kojic acid, perilla extract, ginger extract, knotweed extract, hop extract, raw soybean extract, grape pericarp extract, hokkoshi extract, thick-stemmed bamboo extract, chaff extract, propolis extract, licorice oil extract, olive extract, yucca foam extract, monascus decomposition product, pectin decomposition product, tea tannin, hinokitiol, caffeic acid, cinnamic acid, p-coumaric acid, ferulic acid, chlorogenic acid, and other cinnamic acid homologues.

The bacterial growth inhibitor or bacteriostatic agent may be produced by mixing the acerola fruit juice and other optional ingredients as required, and furthermore sterilizing, filtering, and concentrating, or the like, as required. The food or drink using the bacterial growth inhibitor or bacteriostatic agent can be produced by normal methods using as the raw material thereof raw materials generally used for food or drink and the bacterial growth inhibitor or bacteriostatic agent utilizing the acerola fruit juice.

The bacterial growth inhibitor or bacteriostatic agent against thermo acidophilic bacilli (TAB) utilizing the acerola fruit juice in the present example is derived from naturally occurring substances. Moreover, it has a superior effect of inhibiting or blocking the growth of thermo acidophilic bacilli (TAB).

Moreover, when the acerola fruit juice is used for the bacterial growth inhibitor or bacteriostatic agent, even if heat sterilization is performed under a condition of acidity, the bacterial growth inhibiting or blocking capability can be maintained. Therefore it is practically convenient for preventing the decay of food and drink, in particular fruit juice, fruit drinks, and the like. Moreover, no special preparation or operations are required, so it is also advantageous from the point of view of manufacturability and cost.

The bacterial growth inhibitor or bacteriostatic agent against thermo acidophilic bacilli (TAB) utilizing the acerola fruit juice can be used as a preservative for food and drinks such as fruit juice.

[Example 1]

Next, a specific description of the present invention using examples is given.

Bacterial growth inhibiting/blocking effect of acerola fruit juice

843.3g of acerola fruit was washed with sterile water, and the calyxes thereof were removed. Then, they were squeezed using a bleached cotton cloth that had been sterilized under high-pressure at 121°C for 15 minutes, and 637.6g of the obtained juice was used as the acerola fruit juice solution. A part thereof was heat-treated at 80°C for 10 minutes, and then used as the heat-treated solution. Meanwhile, a strain of *Alicyclobacillus acidoterrestris* (ATCC 49025) was cultured in a YSG medium (yeast extract 0.2%, glucose 0.1%, soluble starch 0.2%, pH 3.7) at 50°C for 6 to 8 hours, until the bacterial growth came to the middle to late period in its logarithmic growth (the turbidity at 660 nm was 0.5 to 0.6), and this bacterial solution was used as the bacterial suspension. Next, a predetermined amount of the heat-treated acerola fruit juice solution prepared as above was added to the YSG medium (96 well microplate; 250 $\mu$l of reaction solution per well), and the bacterial suspension was inoculated so that the content thereof became about $10^3$ cfu/ml, and cultured at 50°C for 20 hours. Then, the number of surviving bacteria in the culture medium was measured by counting colonies that had been formed after culturing at 50°C for 2 days by a pour culturing method using a YSG agar medium (1.5% agar).

In the examples of the present invention, the bacterial growth inhibitory rate was calculated using the following formula.

$$\text{Growth inhibitory rate (\%)} = \{1 - (\text{logarithmic value of number of surviving}$$

$$\text{bacteria - logarithmic value of initial number of inoculation bacteria)/(logarithmic value}$$

$$\text{of number of control bacteria - logarithmic value of initial number of inoculation}$$

$$\text{bacteria)}\} \times 100$$

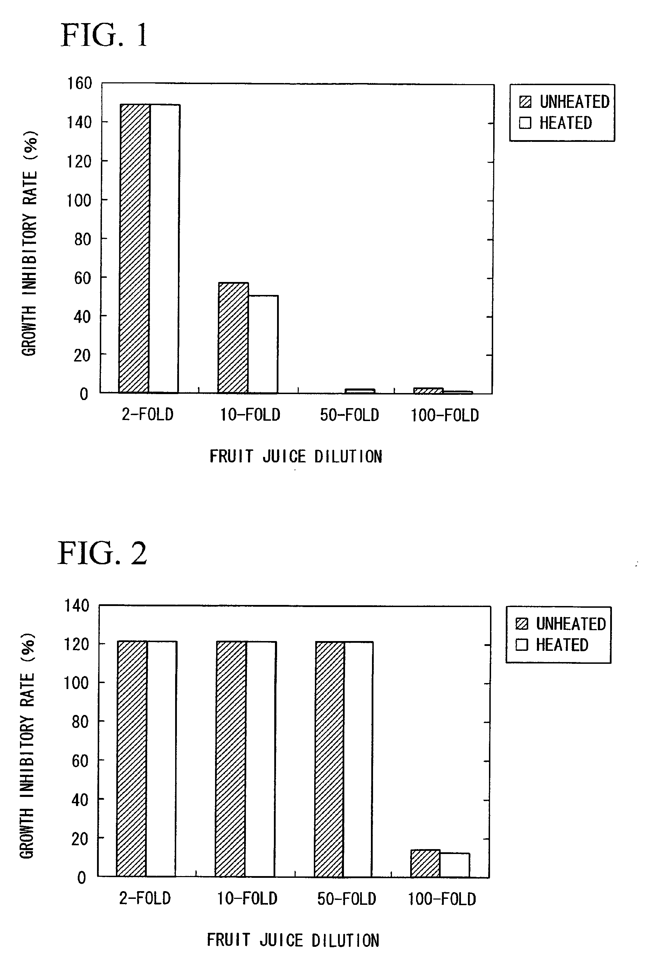

The initial number of inoculated bacteria was set at $3.4 \times 10^2$ cfu/ml, and the number of control bacteria was set at $5.0 \times 10^7$ cfu/ml. The data was taken from the mean value of two measurements carried out at the same time. The results are shown in FIG. 1.

As seen from these results, as the addition of the acerola fruit juice was increased, the growth inhibitory rate rose. If the amount of the acerola fruit juice added was 50% (2-fold dilution) or more, the number of surviving bacteria became almost zero. Even if the acerola fruit juice was heat-treated at 80°C for 10 minutes, the effect was the same.

[Example 2]

Bacterial growth inhibiting/blocking effect of acerola fruit juice with respect to bacteria belonging to the genus *Alicyclobacillus*

Substantially the same experiment was performed on the following strains, and the bacterial growth inhibiting/ blocking capability of the acerola fruit juice (heat-treated and not heat-treated) was examined.

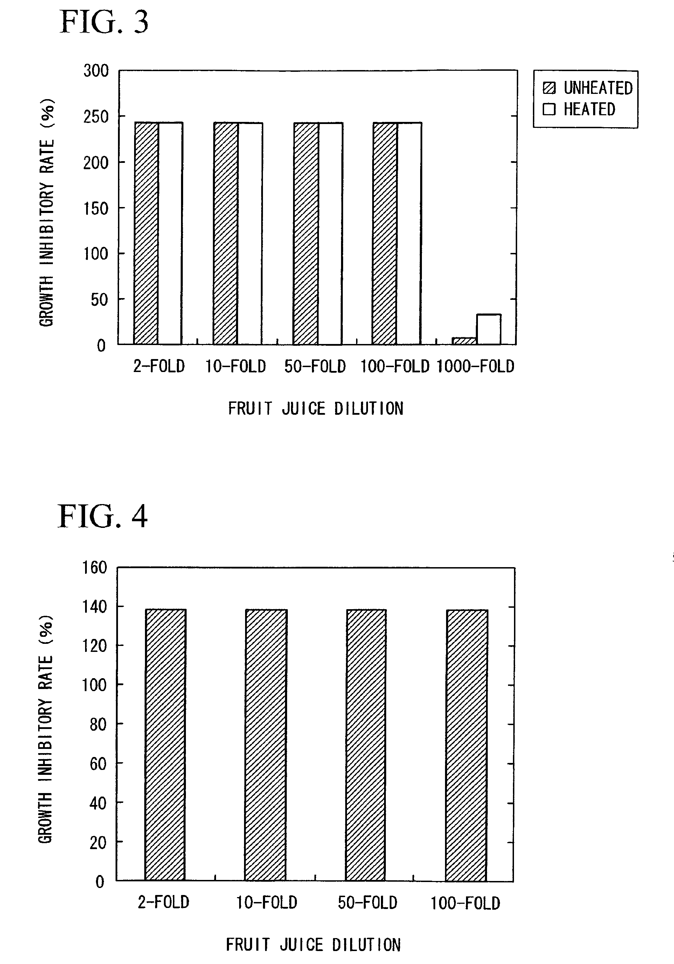

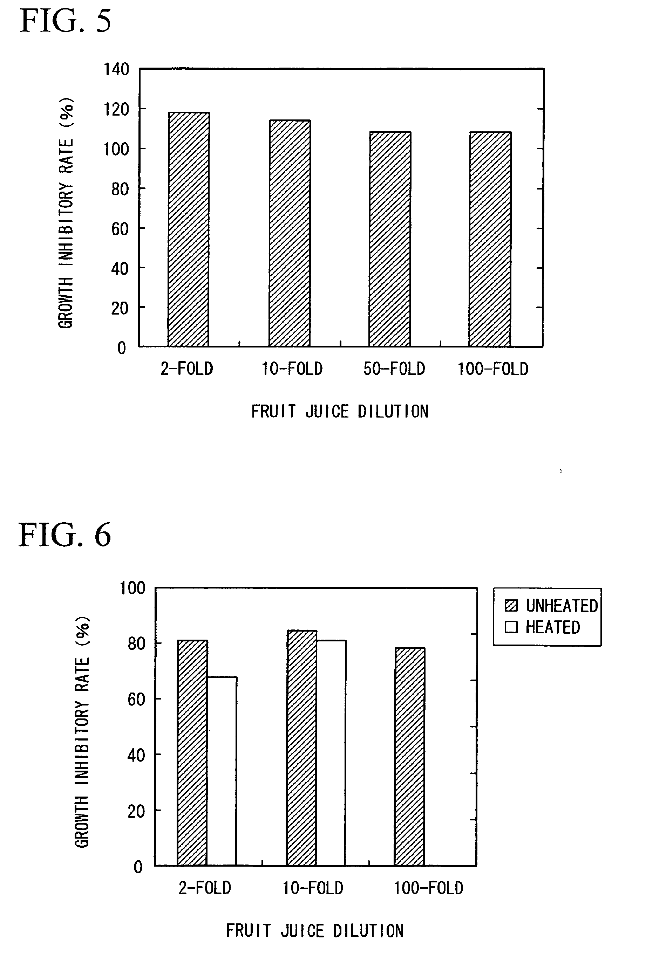

*Alicyclobacillus acidocaldarius* (ATCC 27009)
*Alicyclobacillus cycloheptanicus* (ATCC 49029)
*Alicyclobacillus herbarius* (DSM 13609)
*Alicyclobacillus hesperidum* (DSM 12489)
*Alicyclobacillus acidiphilus* (DSM 14558$^T$)
The results are shown in FIG. 2 to FIG. 6.

As is apparent from these graphs, the acerola fruit juice showed bacterial growth inhibiting/blocking capability with respect to many types of strains belonging to the genus *Alicyclobacillus.*

[Example 3]

Preparation of solid contents of acerola fruit juice

1 kg of acerola fruit originating from Brazil was squeezed, and separated into fruit juice and residue. The residue was washed with 1L of distilled water. This washing solution and the fruit juice were mixed, and then freeze-dried to obtain 80.4 g of powder. The powder is called "solid contents of acerola fruit juice" hereinafter. Ingredient analysis results of the solid contents of acerola fruit juice were as follows.

Glucose: 26.4%
Fructose: 29.7%
Vitamin C: 22.3%
Malic acid: 10.5%
Total polyphenol 0.71%
The total polyphenol content was measured by the Folin-Denis method.

Experiment with respect to bacterial growth inhibition by solid contents of acerola fruit juice

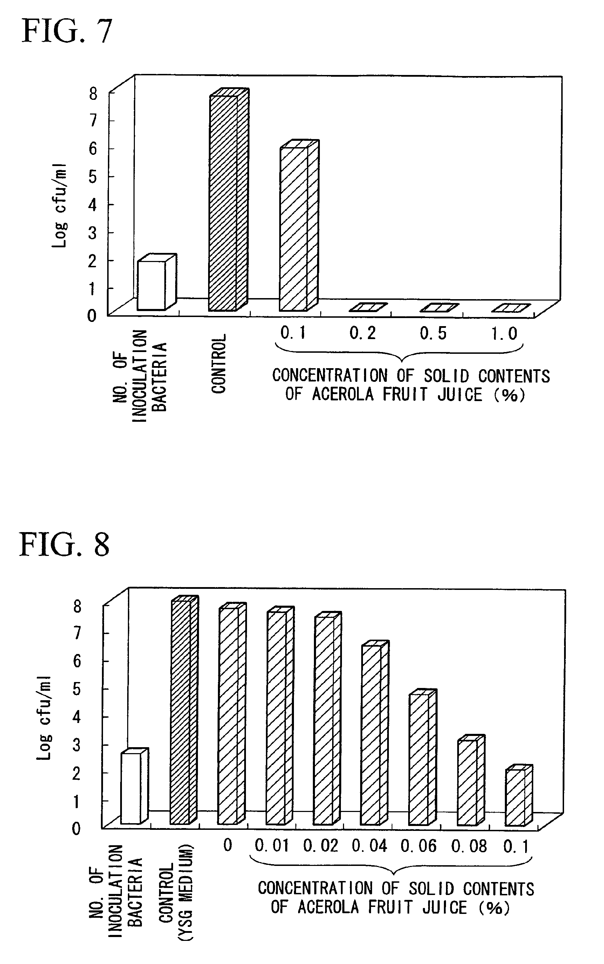

The solid contents of the acerola fruit juice prepared above were dissolved in distilled water to obtain aqueous solutions having concentrations of 0.2, 0.4, 1.0, and 2.0%. 3 ml of each aqueous solution was poured into an L-culture tube. Next, *Alicyclobacillus acidoterrestris* (*A. acidoterrestris*; ATCC 49025) in its logarithmic growth period was inoculated in 2 x concentration of YSG liquid medium, and stirred. After being stirred, 3 ml of this inoculated solution was added to respective L-culture tubes containing the above solid contents of acerola fruit juice in the various concentrations to provide 6 ml/tube. An exposure test was performed on these by a horizontal static culturing method at 50°C for 20 hours. Then, they were cultured by the pour plate agar culturing method using an YSG agar medium (agar 1.5% + YSG medium) at 50°C for 2 days. After culturing, the formed colonies were counted, and the results were compared with the control (distilled water was added instead of the aqueous solution of the solid contents of the acerola fruit juice), and are shown in FIG. 7. When the final concentration of the solid contents of the acerola fruit juice was 0.2% (2 mg/ml) or more, bacterial growth could be completely blocked. It was found that when the final concentration was 0.1%, bacterial growth was inhibited.

[Example 4]

Experiment with respect to bacterial growth inhibition by solid contents of acerola fruit juice in apple fruit juice

The solid contents of the acerola fruit juice were dissolved in distilled water to obtain aqueous solutions having concentrations of 0.02, 0.04, 0.08, 0.12, 0.16, and 0.2%. 3 ml of each aqueous solution was poured into an L-culture tube. Next, an experiment with respect to growth inhibition of A. *acidoterrestris* was performed under the same conditions as for Example 3, except that 70% concentration of apple fruit juice was used instead of 2 x concentration of YSG liquid medium. The results are shown in FIG. 8. As is apparent from this graph, the antibacterial activity increased in proportion to the concentration of the solid contents of acerola fruit juice, and growth was inhibited when the final concentration was 0.1 % (1 mg/ml).

[Example 5]

Experiment with respect to bacterial growth inhibition by solid contents of acerola fruit juice in various fruit juices

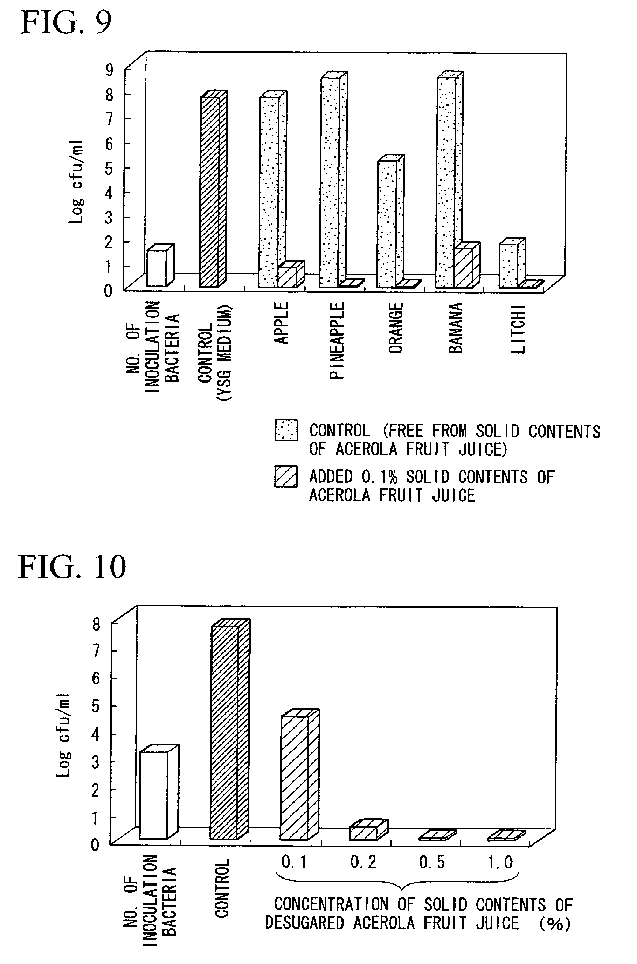

The growth inhibition experiment of A. *acidoterrestris* was performed under the same conditions as for Example 3, except that 70% concentrations of apple fruit juice, pineapple fruit juice, orange fruit juice, banana fruit juice, and litchi fruit juice were used instead of 2 x concentration of YSG liquid medium, and the final concentration of the solid contents of the acerola fruit juice was set to 1 mg/ml. The results are shown in FIG. 9. As is apparent from this graph, in any type of fruit juice, the effect of inhibiting the growth of *A. acidoterrestris* was observed when the concentration of the solid contents of the acerola fruit juice was 1 mg/ml.

[Example 6]

Desugaring treatment of acerola fruit juice

400 ml of acerola fruit juice was prepared by squeezing acerola fruit originating from Brazil. This fruit juice was concentrated by an evaporator, so that the Brix value became 20 to 30%. To this concentrated fruit juice, 2% concentration of yeast (*S. cerevisiae*) was added, and then the juice was fermented at 30°C for 20 hours. After the fermentation, the fermented solution was centrifuged and filtered, and then its supernatant was freeze-dried to obtain 15.9 g of dried powder. This powder was subjected to ingredient analysis. The results were as follows.
Glucose: 0%
Fructose: 0%
Vitamin C: 38.6%
Total polyphenol: 1.18%
The total polyphenol content was measured by the Folin-Denis method.

[Example 7]

Experiment with respect to bacterial growth inhibition by solid contents of desugared acerola fruit juice

An experiment with respect to the bacterial growth inhibition was performed under the same conditions as for Example 2, except that aqueous solutions prepared by dissolving the dried solid contents of the desugared acerola fruit juice prepared in Example 6 in distilled water to make each concentration be 0.2, 0.4, 1.0, or 2.0% were used. The results are shown in FIG. 10. Similarly to the non-desugared case, the solid contents of desugared acerola fruit juice completely blocked the bacterial growth at a concentration of 2 mg/ml.

[Example 8]

Production of beverage containing acerola fruit juice (mixed juice)

Acerola fruit juice, apple fruit juice, and pineapple fruit juice were put into a blending tank. Next, fructose glucose liquid sugar, and acidulants (citric acid, sodium citrate, and malic acid) were dissolved in ion exchanged water in the following proportions, and were then put into the blending tank in the same manner. Then, ion exchanged water was added up to a predetermined amount, and the whole solution was homogenized by stirring. The product obtained in this manner was sterilized at high temperature for a short time, under conditions of about 90°C for 5 seconds, by a plate type heat exchanger or the like, and was then poured into a PET bottle once hot. Then, it was rapidly cooled down, and Product 1 was produced. Moreover, for comparison, Comparative Product 1 was produced in the same manner except that the acerola fruit juice was not mixed in.

(Proportions)

| | |
|---|---|
| Acerola fruit juice: | 10% |
| Apple fruit juice: | 20% |
| Pineapple fruit juice: | 5% |
| Fructose glucose liquid sugar: | 9% |
| Citric acid: | 0.1 % |
| Sodium citrate: | 0.05% |
| Malic acid: | 0.1 % |
| Ion exchanged water: | 55.75% |
| (% notation is all % by weight) | |

For the respective beverages obtained in this manner, first, sensory evaluation was performed by 10 trained panelists to compare the flavor. The results were that the flavor of Product 1 was much better than that of Comparative Product 1. Next, the growth rate of *Alicyclobacillus acidoterrestris* in each beverage was examined. That is, *Alicyclobacillus acidoterrestris* was inoculated respectively in Product 1 and Comparative Product 1, and they were left standing at 50°C for 24 hours, after which the number of surviving bacteria was measured by a pour plate agar culturing method using an YSG agar medium. The results were that the growth of *Alicyclobacillus acidoterrestris* was confirmed in Comparative Product 1, whereas the growth thereof could be completely inhibited in Product 1. Moreover, in Product 1, neither precipitation nor separation was found even after it was left standing at 10°C for 4 weeks, and excellent flavor was maintained. Furthermore, the effect of inhibiting the growth of *Alicyclobacillus acidoterrestris* was not decreased.

[Example 9]

Production of cup jelly containing acerola fruit juice

An appropriate amount of ion exchanged water was put into a jacket kneader type blending tank with a stirrer and heated. Then, sodium citrate and granulated sugar dissolved in ion exchanged water, a commercially available gelling agent (made by San-Ei Gen F.F.I., Inc.) evenly dispersed in heated ion exchanged water using a high speed stirring tank, apple fruit juice, pineapple fruit juice, and acerola fruit juice were sequentially put into the blending tank. Next, acidulants (citric acid and malic acid) were dissolved in ion exchanged water, and were then put into the blending tank in the same manner. Then, ion exchanged water was added up to a predetermined amount, and the whole solution was homogenized by stirring. Then, it was heated to 80°C and stirred for 10 minutes. The product made in this manner was suitably hot-packed in a container for jelly, using a cup-filling machine. Lastly, the product packed in the container was soaked in hot water at 80°C for 30 minutes to sterilize by heating, and thus Product 2 was obtained. Moreover, Comparative Product 2 was produced in the same manner except that the acerola fruit juice was not mixed in.

(Proportions)

| | |
|---|---|
| Acerola fruit juice: | 10% |
| Apple fruit juice: | 20% |
| Pineapple fruit juice: | 5% |
| Granulated sugar: | 15% |
| Citric acid: | 0.1 % |

(continued)

| | |
|---|---|
| Sodium citrate: | 0.05% |
| Malic acid: | 0.1% |
| Gelling agent: | 1.2% |
| Ion exchanged water: | 49.15% |
| (% notation is all % by weight) | |

With respective to the cup jellies obtained in this manner, first, sensory evaluation was performed by 10 trained panelists to compare the flavor. The results were that the flavor of Product 2 was much better than that of Comparative Product 2. Next, the growth rate of *Alicyclobacillus acidoterrestris* in each cup jelly was examined. That is, *Alicyclobacillus acidoterrestris* was inoculated respectively in Product 2 and Comparative Product 2, and they were left standing at 50°C for 24 hours, after which the number of surviving bacteria was measured by a pour plate agar culturing method using anYSG agar medium. The results were that the growth of *Alicyclobacillus acidoterrestris* was confirmed in Comparative Product 2, whereas the growth thereof could be completely inhibited in Product 2. Moreover, in Product 2, no precipitation or separation was found even after it was left standing at 10°C for 4 weeks, and stable physical properties and excellent flavor were maintained. Furthermore, the effect of inhibiting the growth of *Alicyclobacillus acidoterrestris* was not decreased, similarly to in the case of the beverage.

INDUSTRIAL APPLICABILITY

The bacterial growth inhibitor or bacteriostatic function of the present invention can be used for foods such as fruit drinks.

## Claims

1. Use of a puree or a fruit juice obtained from an acerola fruit, a desugared substance thereof, or a dried puree or fruit juice obtained from acerola fruit, as a bacterial growth inhibitor or a bacteriostatic agent against thermo acidophilic bacilli (TAB).

2. Use as claimed in claim 1, in which the thermo acidophilic bacilli (TAB) are bacteria belonging to the genus *Alicyclobacillus.*

3. Use as claimed in claim 2, in which the bacteria belonging to the genus *Alicyclobacillus* are *Alicyclobacillus acidoterrestris, Alicyclobacillus acidiphilus,* or *Alicyclobacillus herbarius.*

4. Use as claimed in any one of claims 1, 2 and 3 in which the bacterial growth inhibitor or bacteriostatic agent is to be added to food or drink.

## Patentansprüche

1. Verwendung eines aus einer Acerolafrucht erhaltenen Pürees oder eines Fruchtsaftes, einer entzuckerten Substanz daran oder eines aus Acerolafrucht erhaltenen getrockneten Pürees oder Fruchtsafts als ein Bakterienwachstumsinhibitor oder ein bakteriostatisches Mittel gegen thermoacidophile Bazillen (TAB).

2. Verwendung nach Anspruch 1, bei welcher die thermoacidophilen Bazillen (TAB) Bakterien sind, die zur Gattung *Alicyclobacillus* gehören.

3. Verwendung nach Anspruch 2, wobei die Bakterien, die zur Gattung *Alicyclobacillus* gehören, *Alicyclobacillus acidoterrestris, Alicyclobacillus acidiphilus* oder *Alicyclobacillus herbarius* sind.

4. Verwendung nach einem der Ansprüche 1, 2 und 3, bei der der Bakterienwachstumsinhibitor oder das bakteriostatische Mittel zu einem Nahrungsmittel oder Getränk zuzusetzen sind.

**Revendications**

1.  Utilisation d'une purée ou d'un jus de fruit obtenu à partir d'un fruit de l'acérola, d'une substance désucrée de celui-ci, ou d'une purée séchée ou d'un jus de fruit séché obtenu à partir du fruit de l'acérola, comme inhibiteur de croissance bactérienne ou agent bactériostatique contre les bacilles thermo-acidophiles (BTA).

2.  Utilisation selon la revendication 1 où les bacilles thermo-acidophiles (BTA) sont des bactéries appartenant au genre *Alicyclobacillus*

3.  Utilisation selon la revendication 2 où les bactéries appartenant au genre *Alicyclobacillus* sont *Alicyclobacillus acidoterrestris, Alicyclobacillus acldiphilus* ou *Alicyclobacillus herbarius.*

4.  Utilisation selon l'une quelconque des revendication 1, 2 et 3 où l'inhibiteur de croissance bactérienne ou l'agent bactériostatique est destiné à être ajouté à un aliment ou une boisson.

## FIG. 1

## FIG. 2

## FIG. 3

## FIG. 4

# FIG. 5

# FIG. 6

FIG. 7

NO. OF INOCULATION BACTERIA

CONTROL

CONCENTRATION OF SOLID CONTENTS OF ACEROLA FRUIT JUICE (%)

FIG. 8

NO. OF INOCULATION BACTERIA

CONTROL (YSG MEDIUM)

CONCENTRATION OF SOLID CONTENTS OF ACEROLA FRUIT JUICE (%)

FIG. 9

CONTROL (FREE FROM SOLID CONTENTS OF ACEROLA FRUIT JUICE)

ADDED 0.1% SOLID CONTENTS OF ACEROLA FRUIT JUICE

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002037705 A
- JP 2002017319 A
- JP 2001516565 PCT
- JP 5334846 A
- JP 2001128651 A
- JP 62208236 A
- JP 2000004768 A
- WO 0164041 A
- JP 5207865 B
- DE 4111040 C
- JP 602272 A
- DE 10026182 A1

**Non-patent literature cited in the description**

- *International Journal of Food Science and Technology,* 1999, vol. 34, 81-85
- *Nippon Shokuhin Kogaku Kaishi,* 2002, vol. 49 (8), 555-558
- **Shadan Hojin Nippon Kaju Kyokai.** *Saishain Kaju Katitsu inryo Jiten,* 01 October 1997, 182-183